# EUROPÄISCHE PATENTSCHRIFT

(11) **EP 1 742 762 B1**
(45) Veröffentlichungstag und Bekanntmachung des Hinweises auf die Patenterteilung: **03.12.2008**
(21) Anmeldenummer: 05732039.2
(22) Anmeldetag: 13.04.2005
(51) Int. Cl.: B23Q 1/58, B23Q 1/34, B23Q 5/027

(54) **VORRICHTUNG ZUR ERZEUGUNG VON MIKROSTRUKTUREN**
DEVICE FOR THE PRODUCTION OF MICROSTRUCTURES
DISPOSITIF POUR PRODUIRE DES MICROSTRUCTURES

(30) Priorität: 23.04.2004 DE 102004020990; 28.07.2004 DE 202004011815 U
(43) Veröffentlichungstag der Anmeldung: 17.01.2007
(60) Teilanmeldung: 06026119.5
(73) Patentinhaber: Schott AG, 55122 Mainz (DE)
(72) Erfinder: OSTENDARP, Heinrich, 31073 Grünenplan (DE)
(74) Vertreter: Gahlert, Stefan
(86) Internationale Anmeldenummer: PCT/EP2005/003860
(87) Internationale Veröffentlichungsnummer: WO 2005/108004

(56) Entgegenhaltungen:
- EP-A- 0 402 011
- EP-A- 0 439 425
- EP-A- 0 476 678
- WO-A-96/03256
- DE-A1- 10 126 039
- GB-A- 2 114 478
- US-A- 5 404 680
- US-A- 5 467 675
- US-A1- 2004 024 487

## Beschreibung

Die Erfindung betrifft eine Vorrichtung zur Erzeugung von Mikrostrukturen gemäß dem oberbegriff von Anspruch 1.

Eine derartige Vorrichtung ist aus der US-A-5467675 bekannt.

Ähnliche Vorrichtungen zur Erzeugung von nicht-rotationssymmetrischen Oberflächen durch eine Drehbearbeitung mit Hilfe eines piezoelektrischen Antriebs sind etwa aus der US 5 467 675 oder aus der GB 2 314 452 A bekannt.

Mit den bekannten Vorrichtungen und den bekannten Verfahren können zwar Feinstruktur-Oberflächenbearbeitungen mit Hilfe von Diamantwerkzeugen durchgeführt werden, jedoch sind diese Vorrichtungen und Verfahren aufgrund unzureichender dynamischer Eigenschaften nicht geeignet, um sehr harte, metallische Werkstoffe präzise zu bearbeiten. Derartige Werkstoffe werden beispielsweise als Formenwerkstoffe für die Herstellung von Linsen durch Heißpressen benötigt. Es kann sich hierbei beispielsweise um Hartmetall-Werkstoffe handeln. In derartige Formen müssen beispielsweise zur Herstellung von Linsen für Beleuchtungszwecke, die in sogenannten Poly-Ellipsoid-Scheinwerfern (PES-Scheinwerfern) eingesetzt werden, ganz bestimmte Mikrostrukturen eingebracht werden, die bei der Formgebung durch Heißpressen auf die betreffenden Linsen übertragen werden. Diese Mikrostrukturen wirken bei den hergestellten Linsen als mikrooptische Komponenten, um eine bestimmte vorgegebene Lichtverteilungscharakteristik im Scheinwerfer einzuhalten.

Die Herstellung derartiger Formen, die etwa aus Hartmetall oder aus Grauguss bestehen können, ist in der beabsichtigten Form bislang nur mit geometrisch unbestimmten Verfahren möglich. Hierzu werden die betreffenden Formen zunächst in makroskopischer Form der betreffenden Linsen durch Drehen bearbeitet. Anschließend erfolgt ggf. ein Polieren der Formoberfläche. Die Bereiche der Form, die zur Erzeugung von Streuzentren auf den damit herzustellenden Linsen vorgesehen sind, werden anschließend beispielsweise durch eine Strahlbehandlung mit Korund in mehreren Arbeitsgängen erzeugt, wobei Abdeckblenden für diejenigen Bereiche verwendet werden, die nicht in dieser Weise mikrostrukturiert werden sollen. Nach der Strahlbearbeitung erfolgt zum Teil noch eine flächige Nachbehandlung. Zur Herstellung einer derartigen Form sind daher zahlreiche manuelle Arbeitsschritte notwendig, was eine sehr zeitaufwändige und teure Bearbeitung bedeutet, um die gewünschte Oberflächenstruktur zu erzeugen. Zudem beinhaltet eine derartige Arbeitsfolge eine Vielzahl von Fehlermöglichkeiten, die eine reproduzierbare Einstellung einer speziellen Lichtverteilung nachteilig beeinflussen.

Die eingangs erwähnten vorbekannten Vorrichtungen mit Piezoantrieben sind für eine derartige Formgebung nicht geeignet, da sie hierzu nicht die notwendige mechanische Stabilität und die erforderlichen dynamischen Eigenschaften aufweisen, um bei der Bearbeitung harter metallischer Werkstoffe mit den erforderlichen hohen Schnittgeschwindigkeiten präzise arbeiten zu können.

Zwar könnte mit den bekannten Vorrichtungen ggf. lagegeregelt gearbeitet werden, jedoch ist dies naturgemäß nur mit einem ausreichenden Abstand bis zur ersten Resonanzfrequenz des jeweiligen Systems möglich, weshalb mit den bekannten Systemen ein Arbeiten bis maximal etwa 1.000 Hz ermöglicht ist. Die Hiermit erreichbaren Schnittgeschwindigkeiten reichen jedoch nicht aus, um bei den vorstehend erwähnten Werkstoffen eine saubere Bearbeitung mit ausreichender Oberflächengüte zu erzielen, insbesondere wenn nicht-rotationssymmetrische Oberflächenstrukturen der vorstehend erwähnten Art hergestellt werden sollen.

Der Erfindung liegt somit die Aufgabe zugrunde, eine Vorrichtung zur Erzeugung von Mikrostrukturen zu schaffen, womit auch eine Bearbeitung von harten metallischen Werkstoffen, wie etwa Hartmetallen und Grauguss, mit hohen Schnittgeschwindigkeiten ermöglicht wird und gleichzeitig nicht-rotationssymmetrische Mikrostrukturen erreichbar sind. Hierbei soll insbesondere die Herstellung von Formen für die Herstellung von Linsen durch Heißpressen ermöglicht werden, die als Linsen für PES-Scheinwerfer geeignet sind und mit Mikrostreulinsenstrukturen versehen sind.

Diese Aufgabe wird erfindungsgemäß durch eine Vorrichtung gemäß Anspruch 1 gelöst.

Die Aufgabe der Erfindung wird auf diese Weise vollkommen gelöst.

Durch eine derartige Kopplung eines schnellen Antriebs mit einer speziell ausgestalteten Führungseinrichtung, die in einer zur Bewegungsrichtung des schnellen Antriebs senkrechten Ebene allseits eine hohe Steifigkeit aufweist, kann ein Aktorgeführtes System zur Bewegung eines Drehwerkzeuges geschaffen werden, das eine ausreichend hohe Resonanzfrequenz verbunden mit einer hohen dynamischen Steifigkeit besitzt, um auch eine Bearbeitung von harten Werkstoffen, wie etwa Hartmetallen oder Grauguss, mit einer ausreichend hohen Schnittgeschwindigkeit zu ermöglichen. Dabei werden Schwingungen vermieden, die sonst leicht bei der Bearbeitung von harten Werkstoffen, wie etwa Grauguss, entstehen können und die die Oberflächenqualität beeinträchtigen würden.

Bei dem schnellen Antrieb handelt es sich vorzugsweise um einen Piezoantrieb.

Daneben sind auch andere Ausführungsform für den schnellen Antrieb denkbar, wie etwa ein hydraulischer Antrieb. Unter einem schnellen Antrieb im Sinne dieser Anmeldung wird ein Antrieb verstanden, der eine schnelle gesteuerte Bewegung in Axialrichtung ausführen kann, in einer dazu senkrechten Ebene jedoch keine gesteuerte Bewegung ausführen kann und nur sehr geringe Kräfte aufnehmen kann. Unter "schnell" ist in diesem Zusammenhang zu verstehen, das der Antrieb bei Ansteuerung mit einem geeigneten Steuersignal eine Bewegung mit einer Frequenz von mindestens 500 Hz oder mehr ausführen kann.

In bevorzugter Weiterbildung der Erfindung weist die Führungseinrichtung in einer Ebene senkrecht zur Zustellrichtung der Führungseinrichtung eine statische Steifigkeit von mindestens 50 N/µm, vorzugsweise von mindestens 100 N/µm, auf.

Mit einer derartigen Vorrichtung können insbesondere Formen zum Heißpressen von Linsen für PES-Scheinwerfer hergestellt werden, die an ihrer Oberfläche mit Mikrolinsenstrukturen versehen sind bzw. "gefrostet" sind. Hiermit lassen sich bei der Bearbeitung von Grauguss oder Hartmetallen Schnittgeschwindigkeiten in der Größenordnung von 60 Meter pro Minute und mehr erzielen. Dies reicht aus, um eine saubere Bearbeitung der nichtrotationssymmetrischen Oberflächen in einer annehmbaren Zeit zu gewährleisten. Es können hierbei konventionelle Schneidplatten-Einsätze verwendet werden.

Erfindungsgemäß weist die Führungseinrichtung einen Stößel auf, der an ersten und zweiten Federelementen beweglich gehalten ist, wobei die Federelemente in Radialrichtung des Stößels weitgehend unnachgiebig sind, jedoch senkrecht dazu in Richtung der Stößelachse eine Auslenkung gegen die Federkraft der Federelemente erlauben.

Hierbei ist das Werkzeug an einem ersten Ende des Stößels eingespannt, während der Stößel an seinem dem Werkzeug gegenüberliegenden zweiten Ende gegen den schnellen Antrieb vorgespannt ist.

Auf diese Weise wird die notwendige Rückstellkraft gewährleistet, gegen die der schnelle Antrieb wirkt.

Erfindungsgemäß ist der Stößel ferner durch einen Fluiddruck gegen den schnellen Antrieb vorgespannt.

Hierdurch wird die Auswirkung des Schnittkraftrauschens reduziert.

Ferner ist erfindungsgemäß der Stößel in einem Gehäuse gehalten, wobei der Stößel mit dem Gehäuse einen druckdicht abgeschlossenen Raum bildet, der mit einem Fluiddruck beaufschlagbar ist, wobei der Raum über eine erste mit dem Stößel verbundene Membran auf der Piezoseite und eine zweite mit dem Stößel verbundene Membran auf der Werkzeugseite in Axialrichtung nach außen hin abgedichtet ist, und wobei die erste Membran eine größere dem Fluiddruck ausgesetzte wirksame Fläche als die zweite Membran aufweist.

Auf diese Weise kann die Rückstellkraft für den Piezoantrieb auf einfache und zuverlässige Weise gewährleistet werden und gleichzeitig eine Auswirkung des Schnittkraftrauschens reduziert werden.

Die Membranen bestehen in vorteilhafter Weiterbildung aus Aluminium.

In vorteilhafter Weiterbildung der Erfindung weist das Gehäuse mindestens ein aus einem Sintermaterial, vorzugsweise einem Sintermetall, bestehendes Dämpfungselement auf. Das Dämp-fungselement weist hierbei vorzugsweise einen Anteil einer offen Porosität auf.

Dabei kann ferner zwischen dem Dämpfungselement und der zugewandten Membran ein Spalt einer Dicke von vorzugsweise 0,1 bis 1 Millimeter gebildet sein, der mit einem Dämpfungsmittel, gefüllt ist. Hierbei kann es sich etwa um Luft, Fett oder Öl handeln.

Durch diese Maßnahmen können die Auswirkungen des Schnittkraftrauschens noch weiter reduziert werden.

In vorteilhafter Weiterbildung der Erfindung ist der Piezoantrieb an seinem dem Stößel abgewandten ersten Ende an einer Aufnahme einspannt und ist an seinem dem ersten Ende gegenüberliegenden zweiten Ende über ein Ausgleichselement, das Ausrichtungsfehler zwischen der Stößelachse und der Längsachse des Piezoantriebs kompensiert, mit dem Stößel gekoppelt.

Hierbei kann das zweite Ende des Piezoantriebs etwa über ein konvexes Element, insbesondere eine Kugel oder ein balliges Element, an einer zugeordneten Zentrierung des Stößels anliegen.

Auf diese Weise wird die Einbringung statischer und dynamischer Querkräfte in radialer Richtung, die etwa durch Ausrichtungsfehler zwischen dem Piezoantrieb und dem Stößel sowie durch Schnittkraftrauschen entstehen können, weitgehend ausgeschaltet.

Gemäß einer alternativen Ausführung der Erfindung ist der Piezoantrieb an seinem zweiten Ende durch eine Deckplatte abgeschlossen, die über eine Einschnürung mit dem Stößel gekoppelt ist.

Auf diese Weise lässt sich die Masse des Gesamtsystems noch weiter verringern und es kann gegebenenfalls eine Fügungsstelle eingespart werden, was vorteilhaft für die Dynamik des Gesamtsystems ist.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Figur 1: eine Vorrichtung zur Erzeugung von Mikrastrukturen in stark vereinfachter, schematischer Darstellung, die nicht von der Erfindung gedecht ist;
- Figur 2: einen Längsschnitt durch einen erfindungsgemäßen Aktor gemäß Figur 1;
- Figur 2a: einen Ausschnitt einer gegenüber Figur 2 abgewandelten Ausführung des erfindungsgemäßen Aktors im Bereich der Verbindung zwischen Aktor und Stößel;
- Figur 3: eine perspektivische Ansicht des Aktors gemäß Figur 2;
- Figur 4: den Frequenzgang und den Phasengang des Aktors mit Werkzeug gemäß der Figuren 2 und 3;

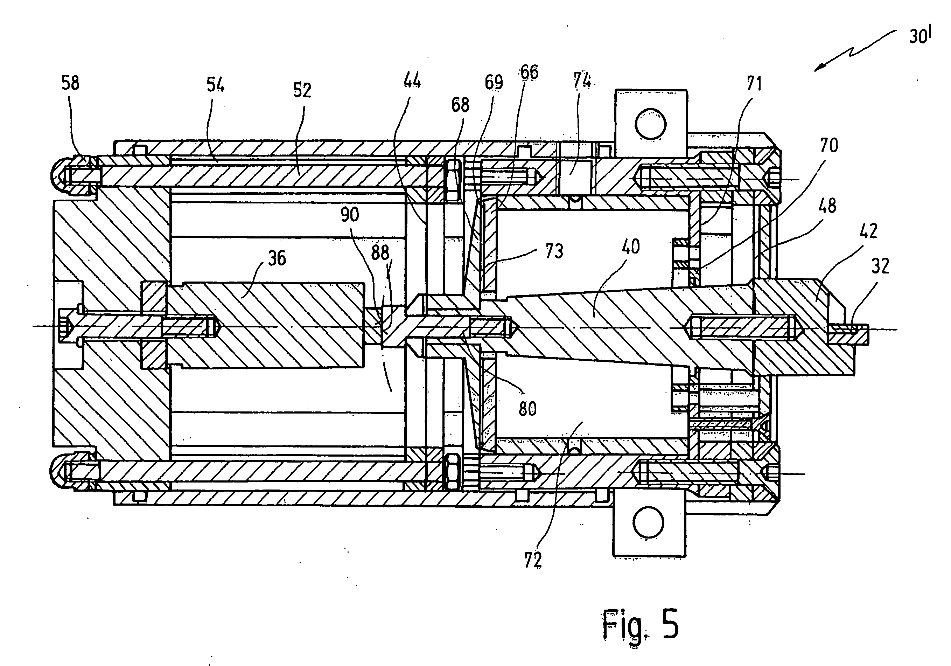

- Figur 5: eine Ausschnittsvergrößerung einer herzustellenden Soll-Mikrolinsenstruktur für die Formherstellung zur Herstellung einer Linse für einen PES-Scheinwerfer;
- Figur 6: eine Wiedergabe der Soll-Mikrostruktur gemäß Figur 5 als Pixelbild;
- Figur 7: eine Ortsfrequenzanalyse der Soll-Mikrostruktur gemäß Figur 6 entlang des Außenumfangs bei einem Radius von R = 34 mm;
- Figur 8: ein Prinzipschaltbild mit der Steuerung für den Aktor;
- Figur 9: eine schematische Darstellung des Algorithmus zur Ansteuerung des Aktors und
- Figur 10: einen Längsschnitt durch einen erfindungsgemäßen Aktor, der gegenüber der Ausführung gemäß Figur 2 leicht abgewandelt ist.

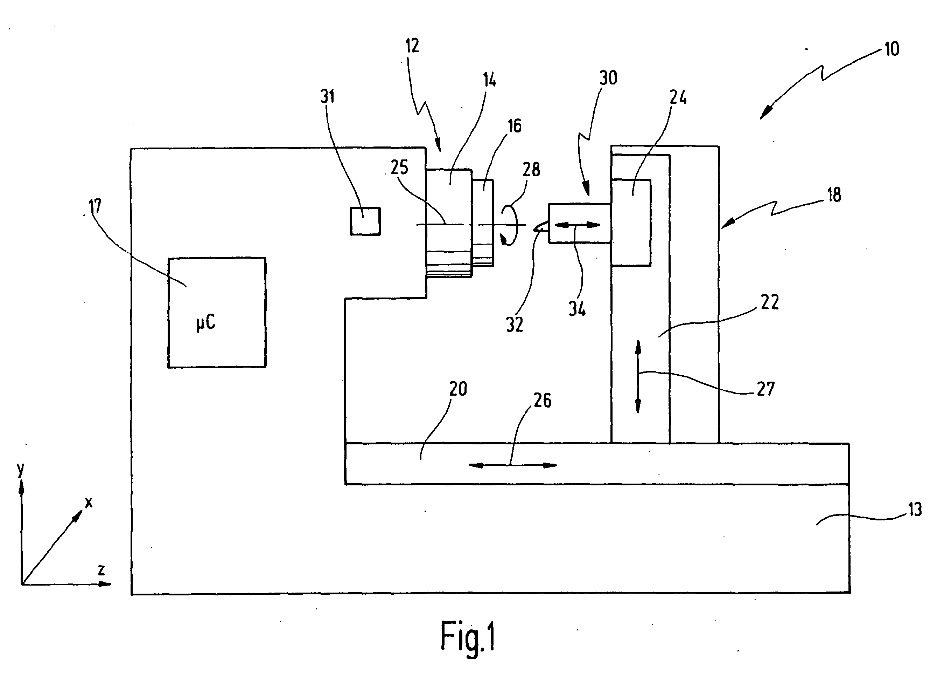

In Figur 1 ist eine Vorrichtung zur Erzeugung von Mikrastrukturen äußerst schematisch dargestellt und insgesamt mit der Ziffer 10 bezeichnet.

Bei der Vorrichtung 10 handelt es sich um eine Drehmaschine, die zusätzlich mit einem Aktor 30 ausgestattet ist, um eine schnelle, piezogesteuerte Bewegung eines Werkzeugs 32 im Bezug auf ein Werkstück 16 zu ermöglichen. Die Vorrichtung 10 weist eine Spindel 12 auf, die um ihre Spindelachse 25 rotierend antreibbar ist, wie durch einen Pfeil 28 verdeutlicht ist. An der Spindel 12 ist eine Aufnahme 14 in Form eines Spannfutters zum Spannen eines Werkstücks 16 vorgesehen.

Auf einem Maschinenbett 13 der Vorrichtung 10 ist ein Antrieb 20 entlang einer sich in z-Richtung (parallel zur Spindelachse 25) erstreckenden Führung vorgesehen, mittels derer ein Werkzeugschlitten 18 in z-Richtung verfahren werden kann, wie durch den Doppelpfeil 26 angedeutet ist. Am Werkzeugschlitten 18 ist ein Antrieb 22 vorgesehen, mittels dessen ein Schlitten 24 in Vertikalrichtung (y-Richtung) verfahren werden kann, wie durch den Doppelpfeil 27 angedeutet ist. Am Schlitten 24 ist schließlich ein weiterer Antrieb vorgesehen, der ein Verfahren in Horizontalrichtung (x-Richtung quer zur Spindelachse 25) ermöglicht.

Am Schlitten 24 ist schließlich der Aktor 30 aufgenommen, mittels dessen das Werkzeug 32 zusätzlich in z-Richtung verfahrbar ist, wie durch den Doppelpfeil 34 angedeutet ist.

Zur Steuerung der Drehmaschine und des Aktors ist eine zentrale Steuerung vorgesehen, die schematisch mit der Ziffer 17 angedeutet ist. Die Winkelstellung der Spindel 12 kann mittels eines Drehgebers 31 überwacht werden.

Die Vorrichtung 10 kann nun zur Mikrostrukturierung der Oberfläche eines Werkstücks 16 derart benutzt werden, dass das Werkstück 16 mittels der Spindel 12 um die Spindelachse 25 rotierend angetrieben wird, während der Aktor 30 mittels des Schlittens 24 in x-Richtung positioniert wird und das Werkzeug 32 mittels des Aktors 30 in Abhängigkeit von der über den Drehgeber 31 erfassten Winkelposition des Werkstückes 16 und von der Ortskoordinate des Aktors 30 in x-Richtung auf die Werkstückoberfläche zugestellt wird. Auf diese Weise kann eine Mikrostrukturierung der Werkstückoberfläche erreicht werden, wobei nicht-rotationssymmetrische Oberflächenstrukturen mit hoher Präzision erzeugt werden können.

Mit dem anhand von Figur 1 beschriebenen Aufbau lässt sich eine Bearbeitung von Werkstücken nach der Art des Plandrehens erreichen, das heißt das Werkstück wird rotierend angetrieben und das Werkzeug 32 wird quer zur Spindelachse vorwiegend in Horizontalrichtung (x-Richtung) bzw. radial zum Werkstück 16 bewegt, während die schnelle Zustellbewegung des Aktors 30 in z-Richtung, also in Richtung der Spindelachse 25, erfolgt. Zusätzlich sind natürlich Bewegungen in anderen Richtungen möglich, beispielsweise in z-Richtung zum Drehen von Konturen.

Es versteht sich, dass auch eine Werkstückbearbeitung nach der Art des Längsdrehens möglich ist. Hierzu erfolgt die Positionierbewegung für den Aktor 30 mittels des Antriebs 20 in z-Richtung, während der Aktor 30 eine Zustellbewegung in einer dazu senkrechten Ebene (x-/y-Ebene) ermöglicht. Zweckmäßigerweise ist hierzu der Aktor derart an dem Schlitten 24 positioniert, dass die Piezoachse in x-Richtung (oder ggf. in y-Richtung) ausgerichtet ist. Mit einer derartigen Anordnung könnte also eine Mikrostrukturierung eines Werkstücks an der Außenoberfläche (oder ggf. an der Innenoberfläche) nach der Art des Außenrunddrehens bzw. Innenrunddrehens durchgeführt werden.

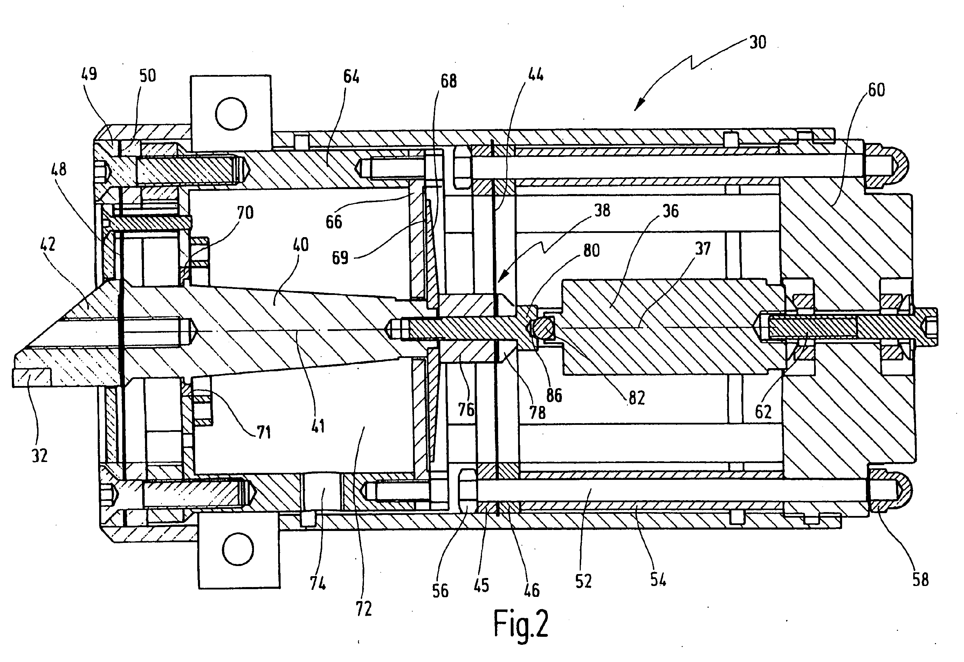

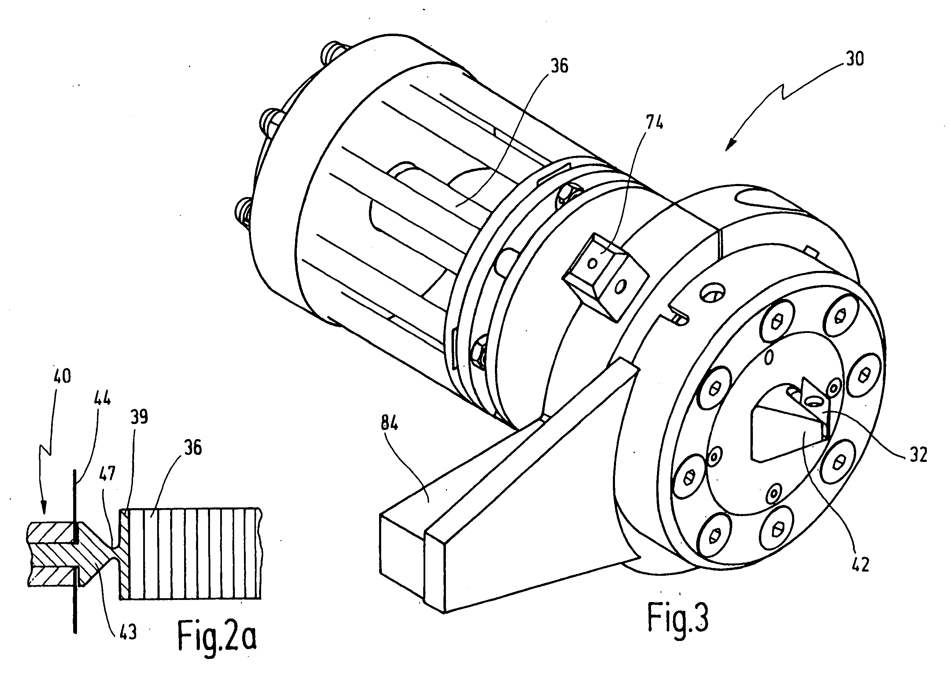

Der besondere Aufbau des Aktors, der gegen eine Rückstellkraft in Richtung der Piezoachse sehr schnell bewegbar ist, jedoch in einer zur Piezoachse senkrechten Ebene eine hohe Steifigkeit besitzt, wird im Folgenden anhand der Figuren 2 und 3 näher beschrieben.

Der in den Figuren 2 und 3 dargestellte insgesamt mit der Ziffer 30 bezeichnete Aktor besteht im Wesentlichen aus einem Piezoantrieb 36, der an einem Gehäuse aufgenommen ist und der über eine Führungseinrichtung 38 auf ein Werkzeug 32 wirkt. Der Piezoantrieb 36 ermöglicht lediglich eine Bewegung in Axialrichtung des Piezoantriebs, kann jedoch in einer Ebene senkrecht dazu keine Stellkräfte erzeugen. Mittels der Führungseinrichtung 38 wird nun gewährleistet, dass Stellbewegungen des Piezoantriebs 36 in seiner Axialrichtung unmittelbar auf das Werkzeug 32 übertragen werden können, dass der gesamte Aktor 30 jedoch in einer Ebene senkrecht zur Piezoachse eine hohe Steifigkeit aufweist.

Hierzu weist die Führungseinrichtung 38 einen Stößel 40 auf, dessen Stößelachse 41 möglichst genau mit der Längsachse 37 des Piezoantriebs 36 ausgerichtet ist. Der Stößel 40 ist gegen die kraft von ersten Federelementen 44 und zweiten Federelementen 48 in Richtung seiner Stößelachse 41 in Axialrichtung bewegbar, ist jedoch durch die spezielle Ausgestaltung und Einspannung der Federelemente 44, 48 in einer Ebene senkrecht zur Stößelachse 41 praktisch unnachgiebig aufgehängt. Bei den Federelementen 44 bzw. 48 handelt es sich um Blattfedern aus breitem Federstahl geringer Stärke, wie er etwa als Fühlerlehrenband bekannt ist. Diese Blattfedern sind an ihren äußeren Enden an Haltern fest eingespannt, während der Stößel 40 in ihrer Mitte befestigt ist. Die ersten Federelemente 44 sind zwischen ringförmigen Haltern 45, 46 eingespannt, während die zweiten Federelemente 48 zwischen ringförmigen Haltern 49, 50 eingespannt sind.

Insgesamt ergibt sich auf diese Weise eine mögliche Axialauslenkung des Stößels in der Größenordnung von etwa 0,5 mm, während der Stößel 40 mit einer sehr hohen Steifigkeit in einer Ebene senkrecht dazu gehalten ist (statische Steifigkeit größer 100 N/µm). Die notwendige Rückstellkraft auf den Piezoantrieb 36 wird im dargestellten Fall nicht mechanisch sondern pneumatisch erzeugt. Hierzu ist der Stößel 40 innerhalb eines Gehäuses 64 derart aufgehängt, dass ein nach außen luftdicht abgeschlossener Hohlraum 72 erreicht wird, der über einen Druckluftanschluss 74 mit Druckluft beaufschlagt werden kann. Der Hohlraum 72 ist in Axialrichtung durch eine erste Membran 68 an seinem dem Piezoantrieb 36 zugewandten Ende und durch eine zweite Membran 70 am werkzeugseitigen Ende abgedichtet. Hierbei ist der nach außen (zur Umgebungsluft) hin wirksame Membrandurchmesser bei der ersten Membran 68, die dem Piezoantrieb 36 zugewandt ist, deutlich größer als der Membrandurchmesser 70 auf der gegenüberliegenden Seite. Somit ergibt sich eine Druckdifferenz, durch die der mit den beiden Membranen 68, 70 im Zentrum verbundene Stößel 40 in Richtung auf den Piezoantrieb 36 vorgespannt wird. Die Vorspannkraft, die naturgemäß größer als die vom Piezoantrieb 36 erzeugten Beschleunigungskräfte sein sollte, kann durch die Wahl der Flächenverhältnisse der Membranen 68, 70 und durch den angewendeten Druck eingestellt werden.

Die Membranen 68, 70 bestehen vorzugsweise aus relativ starren Aluminiumelementen und liegen an ihrem Außenumfang jeweils an einer dünnen Gegenmembran 69 bzw. 71 an, die sich durch den Überdruck im Hohlraum 72 gegen die Membran 68 bzw. 70 anpresst. Ferner ist am axialen Ende des Hohlraums 72, das dem Piezoantrieb zugewandt ist, mit einem sehr geringen Abstand zur Gegenmembran 69 eine sich weitgehend über den gesamten Querschnitt des Hohlraums 72 erstreckende Sintermetallplatte 66 gehalten. Die Sintermetallplatte 66 besteht etwa aus Sinterstahl und weist einen gewissen Anteil einer offenen Porosität auf.

Auf diese Weise ist die Sintermetallplatte 36 luftdurchlässig, um den im Hohlraum 72 herrschenden Innendruck auf die Membran 68 übertragen zu können, führt jedoch infolge der dünnen Kanäle, die durch die offene Porosität gebildet sind, zu einer merklichen Dämpfung, wodurch die Auswirkungen des Schnittkraftrauschens im Betrieb des Aktors deutlich reduziert werden können.

Das Werkzeug 32 selbst kann etwa als Schneidplatte ausgebildet sein, die an einem Werkzeughalter 42 befestigt ist, der (mittels einer nicht dargestellten Schraube) am äußeren axialen Ende des Stößels 40 befestigt ist, wobei gleichzeitig die Befestigung an den zweiten Federelementen 48 in Form der gekreuzten Blattfedern erfolgt. Das gegenüberliegende Ende des Stößels 40 ist mit den beiden ersten sich kreuzenden Federelementen 44 fest verbunden. Hierzu dient eine Schraube 80, die sich durch entsprechende zentrale Ausnehmungen der beiden sich kreuzenden Federelemente 44 hindurch unter Zwischenlage eines Abstandshalters 76 und eines Zwischenstückes 78 in das Ende des Stößels 40 hinein erstreckt und damit verschraubt ist.

Der Piezoantrieb 36 ist an seinem dem Stößel 40 abgewandten Ende über eine Piezoaufnahme 62 mit einem Endstück 60 starr verschraubt. An seinem dem Stößel 40 zugewandten Ende liegt der Piezoantrieb 36 über eine Kugel 82 über eine Zentrierung 86 an der Schraube 80 an. Auf diese Weise werden etwaige Radialkräfte auf den Piezoantrieb 36 vermieden, die aus einem Ausrichtungsfehler zwischen der Längsachse 37 des Piezoantrieb 36 und der Stößelachse 41 bedingt sein könnten. Somit ist gewährleistet, dass der Piezoantrieb 36 lediglich in Richtung seiner Längsachse 37 beansprucht wird.

Die aus dem Piezoantrieb 36 und seiner Aufhängung mit Endstück 60 gebildete Einheit ist über Gewindebolzen 52 unter Zwischenlage von Abstandshülsen 54 unmittelbar durch die Halter 45, 46 hindurch verschraubt.

Insgesamt ergibt sich auf diese Weise ein kompakter Aktor 30, bei dem der Piezoantrieb 36 gegen eine pneumatische Rückstellkraft in Axialrichtung bewegbar ist und in einer Ebene senkrecht dazu eine hohe Steifigkeit aufweist.

Auf die Beschreibung zusätzlicher Maßnahmen, wie etwa auf einen kompletten Spritzschutz zum Schutz des Piezoantriebs 36 gegen Schneidöl während der Drehbearbeitung, wird hier verzichtet, da diese dem Fachmann geläufig sind.

Eine Abwandlung der Verbindung zwischen Piezoantrieb 36 und Stößel 40 ist aus Figur 2a zu ersehen. Auch hierbei ist zwischen dem Piezoantrieb 36 und dem Stößel 40 ein Ausgleichselement 43 vorgesehen, das Ausrichtungsfehler zwischen der Längsachse 37 des Piezoantriebs 36 und der Stößelachse 41 kompensiert. Hierbei ist jedoch das Ausgleichselement 43 als Einschnürung 47 ausgebildet, die direkt mit einer Endplatte 39 des Piezoantriebs 36 und mit dem Stößel 40 gekoppelt ist und so eine direkte, jedoch seitlich nachgiebige Verbindung zwischen Piezoantrieb 36 und Stößel 40 herstellt.

In Figur 3 ist zusätzlich noch ein seitlicher Tragarm 84 erkennbar, mittels dessen der Aktor 30 befestigt werden kann, etwa an dem Schlitten 24.

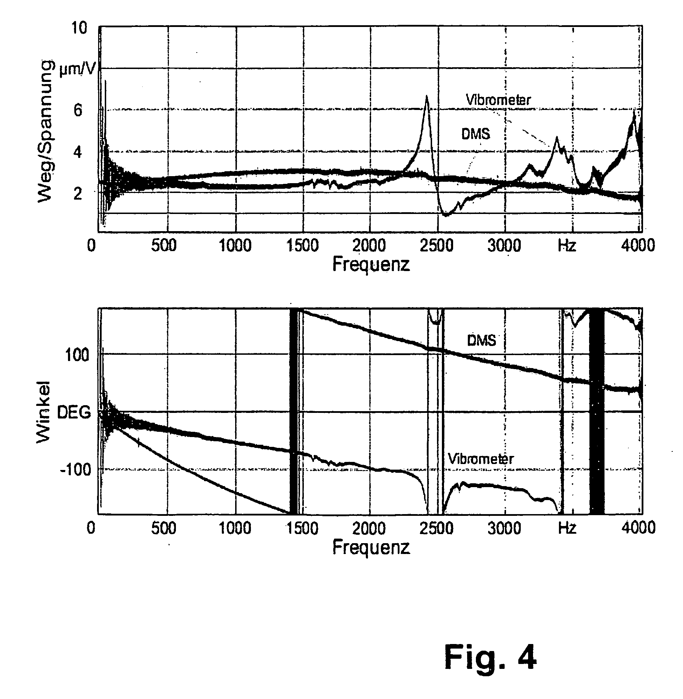

In Figur 4 ist nun der gemessene Frequenzgang und Arbeitsbereich des Aktors gemäß der Figuren 2 und 3 dargestellt. Im vorliegenden Fall wurde als Piezoantrieb 36 ein Piezokristall von 40 µm Maximalzustellung verwendet. Der Piezoantrieb 36 wurde mit einer Amplitude von 1 V in einem Frequenzbereich von 0 bis 4000 Hz angeregt. Der Weg in Abhängigkeit von der Anregungsspannung ist in dem oberen Diagramm von Fig. 4 dargestellt. Das unmittelbar am Werkzeug 32 aufgenommene Vibrometer-Wegsignal zeigt einen sehr konstanten Amplitudengang von ca. 2,5 µm/v von 0 bis ca. 2250 Hz. Die erste Resonanzfrequenz liegt bei ca. 2400 Hz.

Im unteren Teil des Diagramms von Figur 4 ist der Phasengang in Abhängigkeit von der Frequenz dargestellt. Es ergibt sich ein sehr linearer Phasengang von 0 bis 2250 Hz.

Der erfindungsgemäße Aktor ist somit aufgrund seiner sehr guten dynamischen Eigenschaften besonders zur Mikrostrukturierung von Oberflächen geeignet, insbesondere zur spanenden Bearbeitung von harten Werkstoffen, die mit hohen Schnittgeschwindigkeiten bearbeitet werden müssen. Es lassen sich beispielsweise bei einer Strukturamplitude von 5 µm Zustellfrequenzen bis zu etwa 2,25 kHz, realisieren. Bei höheren zustellamplituden bzw. sehr hohem Materialabtrag ist die maximale Zustellfrequenz etwas geringer. Eine weitere Verbesserung der Dynamik durch Verwendung einer konventionellen Closed-Loop-Regelung (anstelle der verwendeten Open-Loop-Regelung) scheint nicht nötig und wäre auch aufgrund des gemessenen Phasengangs nicht bis knapp unterhalb der Resonanzfrequenz möglich.

Der maximale Stellweg des verwendeten Aktors 30 beträgt etwa 40 µm, womit die Resonanzfrequenz bei etwa 2400 Hz liegt. Für viele Anwendungsfälle wäre jedoch auch ein Piezoantrieb mit einem maximalen Stellweg von 20 µm ausreichend. Hiermit ergäbe sich eine Erhöhung der niedrigsten Resonanzfrequenz auf ca. 3,5 kHz.

In Figur 10 ist ein gegenüber der Ausführung gemäß Figur 2 leicht abgewandelte Ausführung eines erfindungsgemäßen Aktors in Längsschnitt dargestellt und insgesamt mit der Ziffer 30' bezeichnet. Dabei werden für entsprechende Teile entsprechende Bezugsziffern verwendet.

Der Aktor 30' entspricht in seinem Aufbau weitgehend dem zuvor an Hand von Figur 2 beschriebenem Aktor 30. Im Unterschied zu der Ausführung gemäß Fig. 2 wurde der Werkzeughalter 42 nunmehr so angeordnet, dass das Werkzeug 32 genau mittig ausgerichtet ist. Dadurch lassen sich zur Axialrichtung senkrechte Kraftkomponenten die bei einer außermittigen Anordnung gemäß Figur 2 auftreten, vermeiden. Auf diese Weise wird das Schnittkraftrauschen weiter vermindert.

Ferner ist die Zentrierung zwischen dem Stößel 30' und dem Piezoantrieb 36 mit einer balligen Oberfläche 88 an der Schraube 80 und einer ebenen Gegenfläche 90 am Piezoantrieb 36 ausgebildet.

Schließlich ist zusätzlich zwischen der Sinterplatte 66 und der Membran 68 bzw. der Gegenmembran 69 ein schmaler Spalt 73 einer Breite zwischen etwa 0,1 und 1 Millimeter, vorzugsweise zwischen 0,1 und 0,5 Millimeter ausgebildet, der mit einem Dämpfungsmedium gefüllt ist. Hierbei kann es sich beispielsweise um Luft, Fett oder Öl handeln.

Auch hierdurch wird das Schnittkraftrauschen weiter reduziert.

## Patentansprüche

1. Vorrichtung zur Erzeugung von Mikrostrukturen, mit einer um ihre Längsachse (25) rotierend antreibbaren Spindel (12), an der eine Aufnahme zum Einspannen eines Werkstückes (16) vorgesehen ist, mit einem Aktor (30), der einen schnellen Antrieb (36) zur Erzeugung einer schnellen Bewegung eines Werkzeugs (32) in einer zur Werkstückoberfläche im Wesentlichen senkrechten Richtung aufweist, wobei der Aktor (30) mittels eines weiteren Antriebes (24) zur Erzeugung eines linearen Vorschubes in einer ersten Richtung (x) entlang einer zu bearbeitenden Werkstückoberfläche positionierbar ist, wobei der schnelle Antrieb (36) mit dem Werkzeug (32) über eine Führungseinrichtung (38) gekoppelt ist, die eine Zustellung des Werkzeugs (32) in Axialrichtung des schnellen Antriebs (36) entgegen einer Rückstellkraft erlaubt und in einer Ebene senkrecht dazu eine hohe Steifigkeit aufweist, wobei die Führungseinrichtung (38) einen in einem Gehäuse (64) gehaltenen Stößel (40) aufweist, der gegen die Rückstellkraft vorgespannt ist, der an ersten und zweiten Federelementen (44, 48) beweglich gehalten ist, die in Radialrichtung des Stößels (40) weitgehend unnachgiebig sind, jedoch senkrecht dazu in Richtung der Stößelachse (41) eine Auslenkung gegen die Federkraft erlauben, wobei das Werkzeug (32) an einem ersten Ende des Stößels (40) eingespannt ist und der Stößel (40) an seinem dem Werkzeug (32) gegenüber liegenden zweiten Ende gegen den schnellen Antrieb (36) vorgespannt ist, **dadurch gekennzeichnet, dass** der Stößel (40) mit dem Gehäuse (64) einen druckdicht abgeschlossenen Raum (72) bildet, der zur Vorspannung gegen den schnellen Antrieb (36) mit einem Fluiddruck beaufschlagbar ist, wobei der Raum (72) über eine erste mit dem Stößel (40) verbundene Membran (68) auf der Antriebsseite und einen zweite mit dem Stößel (40) verbundene Membran (70) auf der Werkzeugseite in Axialrichtung nach außen hin abgedichtet ist, und wobei die erste Membran (68) eine größere dem Fluiddruck ausgesetzte wirksame Fläche als die zweite Membran (70) aufweist.

2. Vorrichtung nach Anspruch 1, **dadurch gekennzeichnet, dass** der schnelle Antrieb als Piezo-Antrieb ausgebildet ist.

3. Vorrichtung nach Anspruch 1 oder 2, **dadurch gekennzeichnet, dass** wenigstens eine der Membranen (68, 70) aus Aluminium besteht.

4. Vorrichtung nach Anspruch 2 oder 3, **dadurch gekennzeichnet, dass** der Piezoantrieb (36) an seinem dem Stößel (40) abgewandten ersten Ende an einer Aufnahme (60) eingespannt ist, und mit seinem dem ersten Ende gegenüberliegenden zweiten Ende über ein Ausgleichselement (43, 82), das Ausrichtungsfehler zwischen der Stößelachse (41) und der Längsachse (37) des Piezoantriebs (36) kompensiert, mit dem Stößel (40) gekoppelt ist.

5. Vorrichtung nach Anspruch 4, **dadurch gekennzeichnet, dass** das zweite Ende des Piezoantriebs (36) über ein konvexes Element, insbesondere eine Kugel (82) oder ein balliges Element, am Stößel (40) anliegt.

6. Vorrichtung nach Anspruch 4, **dadurch gekennzeichnet, dass** der Piezoantrieb (36) an seinem zweiten Ende durch eine Endplatte (39) abgeschlossen ist, die über eine Einschnürung (47) mit dem Stößel (40) gekoppelt ist.

7. Vorrichtung nach einem der Ansprüche 1 bis 6, **dadurch gekennzeichnet, dass** das Gehäuse (64) mindestens ein aus einem Sintermaterial, vorzugsweise aus einem Sintermetall, bestehendes Dämpfungselement (66) aufweist.

8. Vorrichtung nach Anspruch 7, **dadurch gekennzeichnet, dass** das Dämpfungselement (66) einen Anteil einer offenen Porosität aufweist.

9. Vorrichtung nach Anspruch 7 oder 8, **dadurch gekennzeichnet, dass** zwischen dem Dämpfungselement (66) und der zugewandten Membran (69) ein Spalt (73) gebildet ist, der mit einem Dämpfungsmittel, gefüllt ist.

10. Vorrichtung nach Anspruch 9, **dadurch gekennzeichnet, dass** der Spalt (73) mit Luft, Fett oder Öl als Dämpfungsmittel befüllt ist und vorzugsweise eine Dicke von 0,1 bis 1 Millimeter aufweist.

11. Vorrichtung nach einem der Ansprüche 1 bis 10, **dadurch gekennzeichnet, dass** die Führungseinrichtung (38) in einer Ebene senkrecht zur Zustellrichtung der Führungseinrichtung (38) eine statische Steifigkeit von mindestens 50 N/µm, vorzugsweise von mindestens 100 N/µm aufweist.

## Claims

1. Device for producing microstructures with a spindle (12), which is adapted to be driven for rotation about its longitudinal axis (25) and which is provided with a fixture for clamping a workpiece (16), having an actuator (30) provided with a fast drive (36) adapted to produce fast movement of a tool (32) in a direction substantially perpendicular to a workpiece surface, which actuator (30) can be positioned along a workpiece surface to be worked with the aid of an additional drive (24) adapted to produce a linear feed motion in a first direction (x), wherein the fast drive (36) is coupled with the tool (32) via guide means (38) that allow feeding of the tool (32) in axial direction of the fast drive (36), against the action of a restoring force, and that is highly rigid in a plane perpendicular to that direction, wherein the guide means (38) comprises a ram (40) supported within a housing (40) being biased against the restoring force and movably supported on first and second spring elements (44, 48), the spring elements (44, 48) being largely unyielding in the radial direction of the ram (40), while allowing deflection in the direction of the ram axis (41) against the spring force of the spring elements (44, 48), wherein the tool (32) is clamped at a first end of the ram (40) and the ram (40) is biased against the fast drive (36) at its second end opposite the tool (32), **characterized in that-**the ram (40) and the housing (64) form a pressure-tight space (72) to which a fluid pressure can be applied, the space (72) being sealed toward the outside, in axial direction, by a first diaphragm (68) connected with the ram (40) on the driving side, and by a second diaphragm (70) connected with the ram (40) on the tool side, and the first diaphragm (68) having a larger active surface exposed to the fluid pressure than the second diaphragm (70).

2. The device of claim 1, **characterized in that** the fast drive is a piezo drive.

3. The device of claim 1 or 2, **characterized in that** at least one of the diaphragms (68, 70) consists of aluminum.

4. The device of any of claims 2 or 3, **characterized in that** the first end of the piezo drive (36) opposite the ram (40) is clamped on a holding fixture (60) while its second end, opposite the first end, is coupled with the ram (40) via a compensating element (43, 82) which is capable of compensating alignment errors between the ram axis (41) and the longitudinal axis (37) of the piezo drive (36).

5. The device of claim 4, **characterized in that** the second end of the piezo drive (36) rests against the ram (40) via a convex element, in particular via a ball (82) or a spherical element.

6. The device of claim 4, **characterized in that** the second end of the piezo drive (36) ends in a cover plate (39) which is coupled with the ram (40) via a necked portion (47).

7. The device of any of claims 1 to 6, **characterized in that** the housing (64) comprises at least one damping element (66) consisting of a sintered material, preferably a sintered metal.

8. The device of claim 7, **characterized in that** the damping element (66) comprises an amount of open porosity.

9. The device of claim 7 or 8, **characterized in that** a gap (73) being filled with a damping medium is formed between the damping element (66) and the facing diaphragm (69).

10. The device of claim 917, **characterized in that** the gap is filled with air, grease or oil as a damping medium and, preferably, has a thickness of 0.1 to 1 mm.

11. The device of any of claims 1 to 10, **characterized in that** the guide means (38) has a static rigidity of at least 50 N/µm, preferably of at least 100 N/µm, in a plane perpendicular to the feed direction of the guide means (38).

## Revendications

1. Dispositif pour la production de microstructures, avec une broche (12) pouvant être entraînée en rotation autour de son axe longitudinal (25), sur laquelle est prévu un logement pour le serrage d'une pièce (16), avec un actionneur (30), qui présente un entraînement rapide (36) pour la production d'un mouvement rapide d'un outil (32) dans une direction sensiblement perpendiculaire à la surface de la pièce, dans lequel l'actionneur (30) peut être positionné au moyen d'un autre entraînement (24) pour la production d'une avance linéaire dans une première direction (x) le long d'une surface de pièce à usiner, dans lequel l'entraînement rapide (36) est couplé avec l'outil (32) par le biais d'un dispositif de guidage (38), qui permet une avance de l'outil (32) dans la direction axiale de l'entraînement rapide (36) à l'encontre d'une force de rappel et présente dans un plan perpendiculaire à celle-ci une grande rigidité, le dispositif de guidage (38) présentant un poussoir (40), maintenu dans un boîtier (64), qui est précontraint à l'encontre de la force de rappel, qui est maintenu de façon mobile sur des premiers et deuxièmes éléments formant ressort (44, 48) qui sont inflexibles, dans une large mesure, dans la direction radiale du poussoir (40), mais qui permettent cependant, perpendiculairement à celle-ci dans la direction de l'axe du poussoir (41), une déviation à l'encontre de la force élastique, l'outil (32) étant serré à une première extrémité du poussoir (40) et le poussoir (40), à sa deuxième extrémité opposée à l'outil (32), étant précontraint contre l'entraînement rapide (36), **caractérisé en ce que** le poussoir (40), avec le boîtier (64), constitue un espace (72) fermé étanche, qui peut être exposé à une pression de fluide pour la précontrainte contre l'entraînement rapide (36), l'espace (72) étant rendu étanche, dans la direction axiale vers l'extérieur, par une première membrane (68) reliée au poussoir (40), du côté de l'entraînement, et par une deuxième membrane (70) reliée au poussoir (40), du côté de l'outil, et la première membrane (68) présentant une surface active exposée à la pression de fluide plus étendue que la deuxième membrane (70).

2. Dispositif selon la revendication 1, **caractérisé en ce que** l'entraînement rapide est conformé en piézo-entraînement.

3. Dispositif selon la revendication 1 ou 2, **caractérisé en ce qu'**au moins l'une des membranes (68, 70) est constituée en aluminium.

4. Dispositif selon la revendication 2 ou 3, **caractérisé en ce que** le piézo-entraînement (36), au niveau de sa première extrémité opposée au poussoir (40), est serré dans un logement (60) et, par sa deuxième extrémité, opposée à la première extrémité, est couplé au poussoir (40) par l'intermédiaire d'un équilibreur (43, 82) qui compense les erreurs d'alignement entre l'axe de poussoir (41) et l'axe longitudinal (37) du piézo-entraînement (36).

5. Dispositif selon la revendication 4, **caractérisé en ce que** la deuxième extrémité du piézo-entraînement (36) repose sur le poussoir (40) par un élément convexe, en particulier une sphère (82) ou un élément bombé.

6. Dispositif selon la revendication 4, **caractérisé en ce que** le piézo-entraînement (36) est fermé, à sa deuxième extrémité, par une plaque terminale (39), qui est couplée au poussoir (40) par l'intermédiaire d'un rétrécissement (47).

7. Dispositif selon l'une des revendications 1 à 6, **caractérisé en ce que** le boîtier (64) présente au moins un élément d'amortissement (66) en matériau fritté, de préférence en métal fritté.

8. Dispositif selon la revendication 7, **caractérisé en ce que** l'élément d'amortissement (66) présente une part de porosité ouverte.

9. Dispositif selon la revendication 7 ou 8, **caractérisé en ce qu'**est formée, entre l'élément d'amortissement (66) et la membrane (69) orientée vers lui, une fente (73) remplie de matériau amortissant.

10. Dispositif selon la revendication 9, **caractérisé en ce que** la fente (73) est remplie d'air, de graisse ou d'huile, comme matériau amortissant et présente, de préférence, une épaisseur de 0,1 à 1 millimètre.

11. Dispositif selon l'une des revendications 1 à 10, **caractérisé en ce que** le dispositif de guidage (38) présente, dans un plan perpendiculaire au sens d'avance du dispositif de guidage (38), une raideur statique d'au moins 50 N/µm, de préférence d'au moins 100 N/µm.
